# EUROPÄISCHE PATENTSCHRIFT

(11) **EP 2 110 724 B1**
(45) Veröffentlichungstag und Bekanntmachung des Hinweises auf die Patenterteilung: **06.06.2012**
(21) Anmeldenummer: 08007266.3
(22) Anmeldetag: 14.04.2008
(51) Int. Cl.: G05B 19/418

(54) **Verfahren und Computerprogramm zur Planung einer Auswahl und Anordnung von Komponenten eines Automatisierungssystems**
Method and computer program for planning the selection and assembly of components in an automation system
Procédé et programme informatique de planification d'une sélection et agencement de composants d'un système d'automatisation

(43) Veröffentlichungstag der Anmeldung: 21.10.2009
(73) Patentinhaber: SIEMENS AKTIENGESELLSCHAFT, 80333 München (DE)
(72) Erfinder: Edelmann, Thomas, 96050 Bamberg (DE); Holz, Marc, 91058 Erlangen (DE); Volkmann, Frank, 90475 Nürnberg (DE)

(56) Entgegenhaltungen:
- WO-A-00/43847
- WO-A-01/69751
- WO-A-02/101596

## Beschreibung

Bereits während der Planung und Entwicklung von Automatisierungssystemen ist es wichtig, Informationen über Wirkungsbereiche von zu verbauenden Anlagenkomponenten, beispielsweise Sensoren, Aktoren oder Bedienelemente, zu ermitteln und die Planung daran anzupassen. Im Hinblick auf Bedienelemente einer Mensch-Maschine-Schnittstelle ist insbesondere einer ergonomischen Interaktion zwischen Mensch und zu planendem Automatisierungssystem Rechnung zu tragen.

Bisher werden Automatisierungssysteme im Hinblick auf obige Aspekte überwiegend manuell basierend auf menschlichem Expertenwissen geplant und entwickelt. Nachteilig hierbei erweisen sich Planungs- und Entwicklungsaufwand sowie Unsicherheitsfaktoren aufgrund mitunter unsystematischer Planungsansätze. Beispielsweise ist es schwierig zu ermitteln, welche Abtastdichte von Sensoren in einem vorgegebenen Anwendungsfall für einen gewünschten Wirkungsbereich vorgesehen werden sollte. Bisherige Planungswerkzeuge ermöglichen zwar eine visuelle Darstellung der Wirkungsbereiche einzelner Anlagenkomponenten auf Grundlage von deren technischen Spezifikationen, die beispielsweise aus einem Baugruppenkatalog entnommen werden können. Allerdings ermöglichen bisherige Planungswerkzeuge keine automatisierte Ermittlung von Anzahl und genauer räumlicher Anordnung der Anlagenkomponenten. Hierzu wird auf Fachwissen und Erfahrung von Anlagenplanern und -entwicklern zurückgegriffen. Schwierige Fälle.werden bisher vielfach durch einen kostenintensiven und zeitaufwendigen Bau eines Testmodells gelöst. WO 00/43847 zeigt ein solches herkömmliches Planingswerkzeug.

Der vorliegenden Erfindung liegt daher die Aufgabe zugrunde, ein effizientes Verfahren zur Planung einer Auswahl und Anordnung von.Komponenten eines Automatisierungssystems anzugeben, das eine Reduktion von Zeitaufwand, Kosten und Planungsfehlern ermöglicht, sowie eine geeignete Implementierung des Verfahrens zu schaffen.

Diese Aufgabe wird erfindungsgemäß durch ein Verfahren mit den in Anspruch 1 angegebenen Merkmalen und durch ein Computerprogramm mit den in Anspruch 6 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren werden zunächst von Komponenten des Automatisierungssystems zu erfüllende Aufgaben durch eine Benutzerabfrage sowie gewünschte Wirkungsbereiche der Komponenten durch eine Benutzerabfrage ermittelt. Unter einem Wirkungsbereich sind beispielsweise ein von einem Sensor überwachter Bereicht, ein von einem Aktor räumlich erfaßter Bereich oder Sicht- und Bedienbereiche von Elementen einer Mensch-Maschine-Schnittstelle zu verstehen. Aus den ermittelten Aufgaben und Wirkungsbereichen werden automatisiert auf Basis in einer Datenbank gespeicherter technischer Daten verfügbarer Systemkomponenten eine Liste geeigneter Systemkomponenten für das Automatisierungssystem und Vorgaben für deren Anordnung abgeleitet. Ein wesentlicher Aspekt der vorliegenden Erfindung liegt darin, daß für die Liste geeigneter Systemkomponenten und deren Anordnung jeweilige reale Wirkungsbereiche ermittelt und diese mit den gewünschten Wirkungsbereichen auf Abweichungen verglichen werden. Die Liste geeigneter Systemkomponenten und deren Anordnung werden bei unter vorgebbaren Schwellwerten liegenden Abweichungen zur Festlegung der Auswahl und Anordnung der Komponenten des Automatisierungssystems übernommen.

Das erfindungsgemäße Verfahren ermöglicht im Gegensatz zu bisher bekannten Verfahren nicht nur eine Simulation einer Interaktion von Anlagenkomponenten, sondern beispielsweise auch eine Unterstützung bei einer Ermittlung einer erforderlichen Sensordichte, um eine gewünschte räumliche Granularität bei einer Meßwerterfassung sicherzustellen. Bisherige Lösungsansätze basieren auf einer empirischen Ermittlung einer Auswahl und Anordnung von Anlagenkomponenten auf Grundlage gesammelter Erfahren oder von Testaufbauten.

Entsprechend einer bevorzugten Ausgestaltung der vorliegenden Erfindung erfolgt bei über vorgebbaren Schwellwerten liegenden Abweichungen eine Ermittlung geänderter von Komponenten des Automatisierungssystems zu erfüllender Aufgaben und/oder geänderter gewünschter Wirkungsbereiche, anhand derer geänderte reale und gewünschte Wirkungsbereiche auf Abweichungen überprüft werden. Auf diese Weise kann automatisiert ein neuer Iterationsschritt für eine Planung des Automatisierungssystems gestartet werden, falls ursprünglich gewünschte Planungsvorgaben technisch nicht realisierbar sind.

Die zu erfüllenden Aufgaben können jeweils durch eine funktonsorientierte Festlegung einer auswählbaren Komponentenart ermittelt werden, während die gewünschten Wirkungsbereiche anhand von für auswählbare Komponentenarten in einer Datenbank gespeicherte vordefinierte Wirkungsbereiche ermittelt werden können. Dies ermöglicht eine besonders effiziente Festlegung der zu erfüllenden Aufgaben bzw. der gewünschten Wirkungsbereiche.

Die Liste geeigneter Systemkomponenten für das Automatisierungssystem und die Vorgaben für deren Anordnung werden vorzugsweise durch Ermittlung eines den jeweils gewünschten Wirkungsbereich weitestmöglich realisierenden Komponententyps innerhalb einer vordefinierten Komponentenart abgeleitet. Hierdurch können Benutzereingaben zur Planung des Automatisierungssystems weiter minimiert werden, was mit einer reduzierten Fehleranfälligkeit einhergeht.

Das erfindungsgemäße Computerprogramm ist in einen Arbeitsspeicher eines Rechners ladbar und weist zumindest einen Codeabschnitt auf, bei dessen Ausführung von Komponenten des Automatisierungssystems zu erfüllende Aufgaben durch eine Benutzerabfrage und gewünschte Wirkungsbereiche der Komponenten durch eine Benutzerabfrage ermittelt werden. Aus den ermittelten Aufgaben und Wirkungsbereichen werden automatisiert auf Basis in einer Datenbank gespeicherter technischer Daten verfügbarer Systemkomponenten eine Liste geeigneter Systemkomponenten für das Automatisierungssystem und Vorgaben für deren Anordnung abgeleitet werden. Für die Liste geeigneter Systemkomponenten und deren Anordnung werden jeweilige reale Wirkungsbereiche ermittelt und diese mit den gewünschten Wirkungsbereichen auf Abweichungen verglichen. Außerdem werden die Liste geeigneter Systemkomponenten und deren Anordnung bei unter vorgebbaren Schwellwerten liegenden Abweichungen zur Festlegung der Auswahl und Anordnung der Komponenten des Automatisierungssystems übernommen werden, wenn das Computerprogramm im Rechner abläuft.

Die.Erfindung wird nachfolgend an einem Ausführungsbeispiel anhand der Zeichnung näher erläutert. Es zeigt
- Figur 1: eine schematische Darstellung eines Automatisie- rungssystems mit mehreren Systemkomponenten und ih- ren jeweiligen Wirkungsbereichen,
- Figur 2: ein Ablaufdiagramm für ein Verfahren zur Planung einer Auswahl und Anordnung von Komponenten.eines Automatisierungssystems.

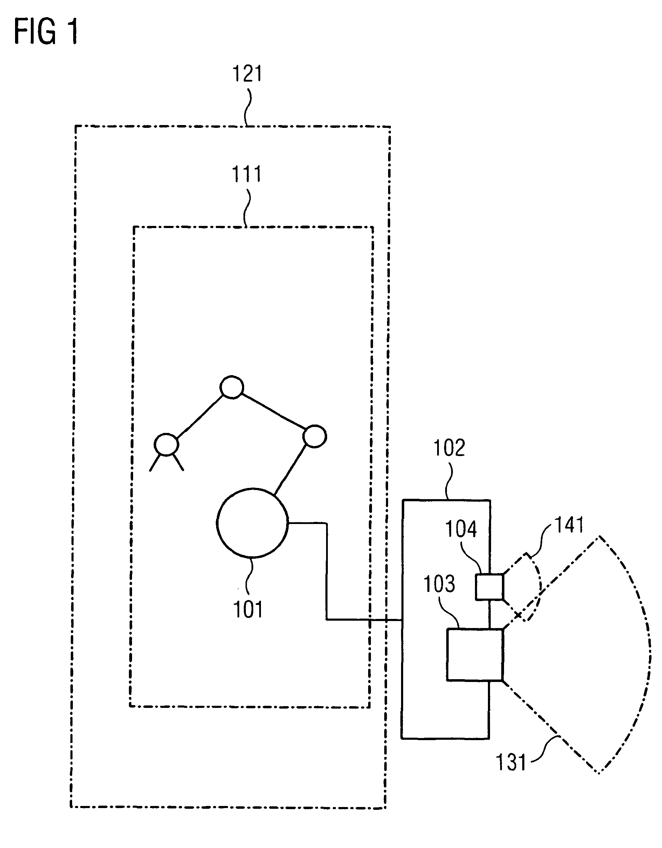

Das in Figur 1 dargestellte Automatisierungssystem umfaßt einen Roboter 101, eine den Roboter 101 steuernden speicherprogrammierbare Steuerungseinrichtung 102, eine mit der Steuerungseinrichtung 102 verbundene Anzeigeeinrichtung 103 und eine mit der Steuerungseinrichtung 102 verbundene Eingabeeinrichtung 104. An der Anzeigeeinrichtung 103 werden Statusinformationen der Steuerungseinrichtung 102 dargestellt, während die Eingabeeinrichtung 103 zur Benutzereingabe von Steuerungs- oder Konfigurationsbefehlen an die Steuerungseinrichtung 102 vorgesehen ist. Neben den Systemkomponenten sind in Figur 1 auch deren gewünschte Wirkungsbereiche 111 (für den Roboter 101), 121 (für Überwachungssensoren) 131 (für die Anzeigeeinrichtung 103), 141 (für die Eingabeeinrichtung 104) dargestellt. Eine Anordnung der Überwachungssensoren ist in Figur 1 nicht dargestellt, da insbesondere diese anhand des nachstehend beschriebenen Verfahrens ermittelt wird.

Der gewünschte Wirkungsbereich 111 des Roboters 101 entspricht einem durch den Roboter 101 erfaßten Aktionsbereich, während für die Überwachungssensoren durch den Wirkungsbereich 121 ein auf zu vermeidende Kollisionen zu überwachender Bereich vorgegeben ist. Die Wirkungsbereiche 131, 141 entsprechen gewünschten Sicht- bzw. Bedienbereichen für die Anzeigeeinrichtung 103 bzw. die Eingabeeinrichtung 104.

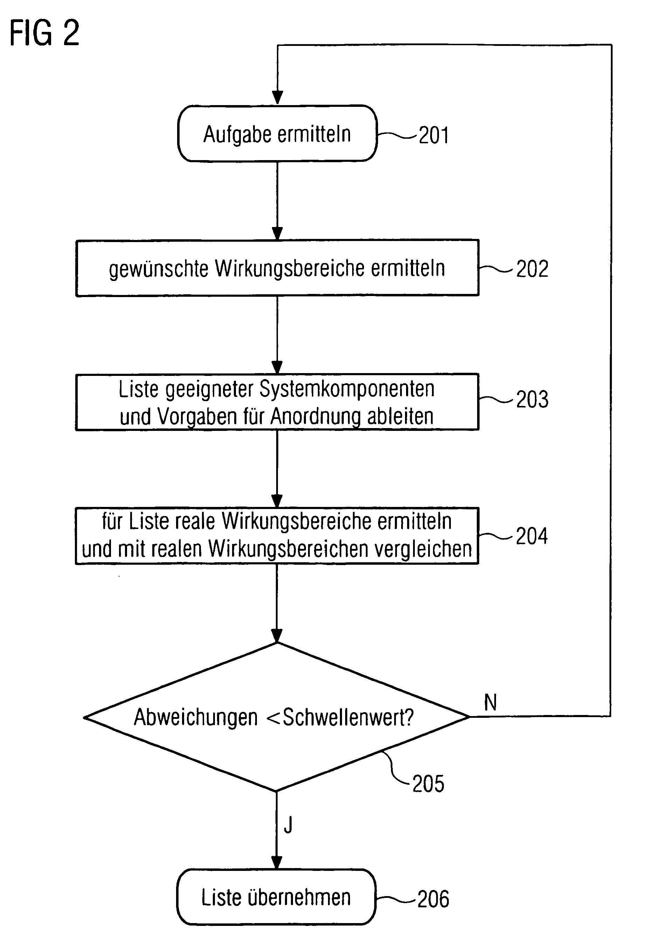

Entsprechend dem in Figur 2 dargestellten Ablaufdiagramm werden zur Planung einer Auswahl und Anordnung von Komponenten eines Automatisierungssystems zunächst von Komponenten des Automatisierungssystems zu erfüllende Aufgaben durch eine Benutzerabfrage ermittelt (Schritt 201). Die zu erfüllenden Aufgaben werden jeweils durch eine funktionsorientierte Festlegung einer auswählbaren Komponentenart ermittelt. Anschließend werden gewünschte Wirkungsbereiche der Komponenten durch eine Benutzerabfrage ermittelt (Schritt 202). Die gewünschten Wirkungsbereiche werden im vorliegenden Ausführungsbeispiel anhand von für auswählbare Komponentenarten in einer Datenbank gespeicherte vordefinierte Wirkungsbereiche ermittelt.

Aus den ermittelten Aufgaben und Wirkungsbereichen werden dann automatisiert auf Basis in einer Datenbank gespeicherter technischer Daten verfügbarer Systemkomponenten eine Liste geeigneter Systemkomponenten für das Automatisierungssystem und Vorgaben für deren Anordnung abgeleitet (Schritt 203). Die Liste geeigneter Systemkomponenten, für das Automatisierungssystem und die Vorgaben für deren Anordnung werden durch Ermittlung eines den jeweils gewünschten Wirkungsbereich weibestmöglich realisierenden Komponententyps innerhalb einer vordefinierten Komponentenart abgeleitet.

Für die Liste geeigneter Systemkomponenten und deren Anordnung werden danach jeweilige reale Wirkungsbereiche ermittelt und diese mit den gewünschten Wirkungsbereichen auf Abweichungen verglichen (Schritt 204). Anschließend erfolgt eine Unterscheidung danach, ob die Abweichungen unter einem vorgebbaren Schwellwert liegen oder nicht (Schritt 205). Liegen die Abweichungen unter dem Schwellwert, werden die Liste geeigneter Systemkomponenten und deren Anordnung zur Festlegung der Auswahl und Anordnung der Komponenten des Automatisierungssystems übernommen (Schritt 206). Andernfalls erfolgt eine Festlegung geänderter von Komponenten des Automatisierungssystems zu erfüllender Aufgaben bzw. geänderter gewünschter Wirkungsbereiche, anhand derer, geänderte reale und gewünschte Wirkungsbereiche auf Abweichungen überprüft werden. Hierzu erfolgt entsprechend dem in Figur 2 dargestellten Ablaufdiagramm nach Schritt 205 eine Rückverzweigung auf Schritt 201.

Das anhand des Ablaufdiagramms gemäß Figur 2 veranschaulichte Verfahren wird entsprechend einer bevorzugten Ausgestaltung der vorliegenden Erfindung durch ein Computerprogramm implementiert. Das Computerprogramm ist in einen Arbeitsspeicher eines Rechners ladbar und weist zumindest einen Codeabschnitt auf, bei dessen Ausführung die vorangehend beschriebenen Schritte ausgeführt werden, wenn das Computerprogramm im Rechner abläuft.

Mit dem vorangehend beschriebenen computerimplementierten Verfahren ist ein Planer in der Lage, ausgehend von Überlegungen zu Aufgaben, die das zu planende Automatisierungssystem lösen soll, Anforderungen an Systemkomponenten festzulegen. Zu diesem Zeitpunkt ist es nicht erforderlich, daß eine Entscheidung über eine Auswahl von konkreten Systemkomponentenerfolgt. Die eigentliche Auswahl erfolgt zu einem späteren Zeitpunkt. Zunächst kann der Planer lediglich gewünschte Wirkungsbereiche bzw. Auren um ausgewählte Systemkomponenten, beispielsweise HMI-Panel (human machine interface), mittels eines Entwurfswerkzeugs einzeichnen, ohne dabei Rücksicht auf eine technische Realisierbarkeit nehmen zu müssen. Dies bedeutet beispielsweise, daß sich der Planer nicht um technische Spezifikationen bestimmter Sensoren kümmern muß, sondern nur ein gewünschtes Abtastergebnis entwirft. Als Unterstützung für die Planung der Auren werden dem Planer zu verwendeten generischen Systemkomponenten Standardinformationen über die jeweiligen Wirkungsbereiche bereitgestellt. Beispielsweise werden für ein HMI-Panel Informationen über einen Sichbarkeitsvektor und eine maximale Entfernung angegeben, von der aus das HMI-Panel eingesehen bzw. bedient werden kann. Auf Basis obiger Vorgaben durch den Planer ermittelt das Entwurfswerkzeug einen Vorschlag für zur verwendende Systemkomponeten, beispielsweise empfohlene Sensoren und ggf. deren Anordnungsdichte, um ein gefordertes.Aurenprofil möglichst gut realisieren. Hierzu greift das Entwurfswerkzeug auf technische Beschreibungen zurück, beispielsweise aus einem Komponentenkatalog. Als Ergebnis ergibt sich ein Überblick über ein tatsächlich realisierbareres Aurenprofil. Durch eine Simulation können dem Planer somit sowohl das geforderte Aurenprofil als auch das realisierbare Aurenprofil präsentiert werden. Der Planer kann nun in einem weiteren Schritt eine weitere Ergebnisverfeinerung vornehmen.

Das vorgehend beschriebene Verfahren bietet den Vorteil, daß der Planer kein Detailwissen über zur Verfügung stehende Systemkomponente haben muß, da ihm hierzu durch das Entwurfswerkzeug ein Vorschlag unterbreitet wird. Eine notwendige Granularität einer Lokalisierung von Auren ist mit bisherigen Ansätzen nicht planbar, was durch die vorliegende Erfindung gelöst wird Im Gegensatz zu bisherigen Ansätzen kann der Planer sich weitgehend unabhängig von technischen Randbedingungen einzelner Systemkomponenten auf eine Lösung einer Planungsaufgabe konzentrieren.

Die Anwendung der vorliegenden Erfindung ist nicht auf das beschriebene Ausführungsbeispiel beschränkt.

## Patentansprüche

1. Verfahren zur Planung einer Auswahl und Anordnung von Komponenten eines Automatisierungasystems, insbesondere Sensoren, Aktoren, und/oder Bedienelemente, bei dem
- von Komponenten des Automatisierungssystems zu erfüllende Aufgaben durch eine Benutzerabfrage ermittelt werden, **dadurch gekennzeichnet, dass**
- gewünschte räumliche Wirkungsbereiche der Komponenten durch eine Benutzerabfrage ermittelt werden,
- aus den ermittelten Aufgaben und räumlichen wirkungsbereichen automatisiert auf Basis in einer Datenbank gespeicherter technischer Daten verfügbarer Systemkomponenten eine Liste geeigneter Systemkomponenten für das Automatisierungssystem und Vorgaben für deren räumliche Anordnung abgeleitet werden,
- für die Liste geeigneter Systemkomponenten und deren räumliche Anordnung jeweilige reale räumliche Wirkungsbereiche ermittelt und diese mit den gewünschten räumlichen Wirkungsbereichen auf Abweichungen verglichen werden,
- die Liste geeigneter Systemkomponenten und deren räumliche Anordnung bei unter vorgebbaren Schwellwerten liegenden Abweichungen zur Festlegung der Auswahl und räumlichen Anordnung der Komponenten des Automatisierungssystems übernommen werden.

2. verfahren nach Anspruch 2,
bei dem bei über vorgebbaren Schwellwerten liegenden Abweichungen eine Ermittlung geänderter von Komponenten des Automatisverungssystems zu erfüllender Aufgaben und/oder geänderter gewünschter Wirkungsbereiche erfolgt, anhand derer geänderte reale und gewünschte Wirkungsbereiche auf Abweichungen überprüft werden.

3. Verfahren nach einem der Ansprüche 1 oder 2,
bei dem die zu erfüllenden Aufgaben jeweils durch eine funktionsorientierte Festlegung einer auswählbaren Komponentenart ermittelt werden.

4. Verfahren nach einem der Ansprüche 1 bis 3,
bei dem die gewünschten Wirkungsbereiche anhand von für auswählbare Komponentenarten in einer Datenbank gespeicherte vordefinierten Mirkungsbereiche ermittelt werden.

5. Verfahren nach einem der Ansprüche 1 bis 4,
bei dem die Liste geeigneter Systemkomponenten für das Automatisierungaeyetem und die Vorgaben für deren Anordnung durch Ermittlung eines den jeweils gewünschten Wirkungsbereich weitestmöglich realisierenden Komponententyps innerhalb einer vordefinierten Komponentenart abgeleitet werden.

6. Computerprogramm, das in einen Arbeitsspeicher eines Rechners ladbar ist und zumindest einen Codeabschnitt aufweist, bei dessen Ausführung
- von Komponenten des Automatisierungesystems zu erfüllende Aufgaben durch eine Benutzerabfrage ermittelt werden, **dadurch gekennzeichnet, dass**
- gewünschte räumliche Wirkungsbereiche der Komponenten durch eine Benutzerabfrage ermittelt werden,
- aus den ermittelten Aufgaben und räumlichen Wirkungsbereichen automatisiert auf Basis in einer Datenbank gespeicherter technischer Daten verfügbarer Systemkomponenten eine Liste geeigneter Systemkomponenten für das Automatisierungssystem und Vorgaben für deren räumliche Anordnung abgeleitet werden,
- für die Liste geeigneter Systemkomponenten und deren räumliche Anordnung jeweilige reale räumliche Wirkungsbereiche ermittelt und diese mit den gewünschten räumlichen Wirkungsbereichen auf Abweichungen verglichen werden,
- die Liste geeigneter Systemkomponenten und deren räumliche Anordnung bei unter vorgebbaren Schwellwerten liegenden Abweichungen zur Festlegung der Auswahl und räumlichen Anordnung der Komponenten des Automatisierungssystems übernommen werden,
wenn das Computerprogramm im Rechner abläuft.

## Claims

1. Method for planning a selection and arrangement of components of an automation system, in particular sensors, actuators and/or operating elements, in which
- tasks to be performed by components of the automation system are determined by means of a user query, **characterized in that**
- desired spatial ranges of action of the components are determined by means of a user query,
- a list of suitable system components for the automation system and stipulations for the spatial arrangement of said components are derived from the determined tasks and spatial ranges of action in an automated manner on the basis of technical data which are stored in a database and relate to available system components,
- respective actual spatial ranges of action are determined for the list of suitable system components and their spatial arrangement and are compared with the desired spatial ranges of action for differences,
- the list of suitable system components and their spatial arrangement are adopted, in the case of differences below predefinable threshold values, in order to determine the selection and spatial arrangement of the components of the automation system.

2. Method according to Claim 2,
in which, in the case of differences above predefinable threshold values, changed tasks to be performed by components of the automation system and/or changed desired ranges of action are determined and are used to check changed actual and desired ranges of action for differences.

3. Method according to either of Claims 1 and 2,
in which the tasks to be performed are each determined by means of a function-oriented determination of a selectable type of component.

4. Method according to one of Claims 1 to 3,
in which the desired ranges of action are determined using predefined ranges of action stored for selectable types of component in a database.

5. Method according to one of Claims 1 to 4,
in which the list of suitable system components for the automation system and the stipulations for the arrangement of said components are derived by determining a type of component which implements the respectively desired range of action as far as possible within a predefined type of component.

6. Computer program which can be loaded into a main memory of a computer and has at least one code section, during the execution of which
- tasks to be performed by components of the automation system are determined by means of a user query, **characterized in that**
- desired spatial ranges of action of the components are determined by means of a user query,
- a list of suitable system components for the automation system and stipulations for the spatial arrangement of said components are derived from the determined tasks and spatial ranges of action in an automated manner on the basis of technical data which are stored in a database and relate to available system components,
- respective actual spatial ranges of action are determined for the list of suitable system components and their spatial arrangement and are compared with the desired spatial ranges of action for differences,
- the list of suitable system components and their spatial arrangement are adopted, in the case of differences below predefinable threshold values, in order to determine the selection and spatial arrangement of the components of the automation system,
when the computer program is executed in the computer.

## Revendications

1. Procédé de planification d'un choix et d'une disposition de composants d'un système d'automatisation, notamment de capteurs, d'actionneurs et/ou d'éléments de commande, dans lequel
- on détermine, en interrogeant un utilisateur, des tâches à remplir par des composants du système d'automatisation, **caractérisé en ce que**
- on détermine, en interrogeant un utilisateur, des zones d'action souhaitées dans l'espace des composants,
- à partir des tâches déterminées et des zones d'action dans l'espace automatisées et sur la base de données techniques mémorisées dans une base de données de composants de système disponibles, on déduit une liste de composants de système appropriés pour le système d'automatisation et des prescriptions pour leur agencement dans l'espace,
- on détermine pour la liste de composants de système appropriés et leur agencement dans l'espace respectivement des zones d'action dans l'espace réelles et on les compare aux zones d'action dans l'espace souhaitées pour en déduire des écarts,
- on prend la liste de composants de système appropriés et leur agencement dans l'espace, si les écarts sont inférieurs à des valeurs de seuil pouvant être prescrites, pour la fixation du choix et de l'agencement dans l'espace des composants du système d'automatisation.

2. Procédé suivant la revendication 1,
dans lequel, si les écarts sont supérieurs à des valeurs de seuil pouvant être prescrites, on effectue une détermination de tâches modifiées à remplir par les composants du système d'automatisation et/ou de zones d'action souhaitées modifiées, à l'aide desquelles on contrôle en écarts des écarts entre des zones d'action modifiées réelles et souhaitées.

3. Procédé suivant l'une des revendications 1 ou 2,
dans lequel on détermine les tâches à remplir respectivement par une fixation suivant la fonction d'un type de composant pouvant être choisi.

4. Procédé suivant l'une des revendications 1 à 3,
dans lequel on détermine les zones d'action souhaitées au moyen de zones d'action définies à l'avance et mémorisées dans une base de données pour des types de composant pouvant être choisis.

5. Procédé suivant l'une des revendications 1 à 4,
dans lequel on déduit la liste de composants de système appropriés pour le système d'automatisation et les prescriptions pour leur agencement par détermination d'un type de composants réalisant le plus possible la zone d'action souhaitée respectivement dans un type de composant défini à l'avance.

6. Programme informatique, qui peut être chargé dans une mémoire de travail d'un ordinateur et qui a au moins une partie de code dans la réalisation de laquelle
- on détermine, en interrogeant un utilisateur, des tâches à remplir par des composants du système d'automatisation, **caractérisé en ce que**
- on détermine, en interrogeant un utilisateur, des zones d'action souhaitées dans l'espace des composants,
- à partir des tâches déterminées et des zones d'action dans l'espace automatisées et sur la base de données techniques mémorisées dans une base de données de composants de système disponibles, on déduit une liste de composants de système appropriés pour le système d'automatisation et des prescriptions pour leur agencement dans l'espace,
- on détermine pour la liste de composants de système appropriés et leur agencement dans l'espace respectivement des zones d'action dans l'espace réelles et on les compare aux zones d'action dans l'espace souhaitées pour en déduire des écarts,
- on prend la liste de composants de système appropriés et leur agencement dans l'espace, si les écarts sont inférieurs à des valeurs de seuil pouvant être prescrites, pour la fixation du choix et de l'agencement dans l'espace des composants du système d'automatisation,
lorsque le programme informatique se déroule dans l'ordinateur.
